# EUROPÄISCHE PATENTSCHRIFT

(11) **EP 1 175 168 B1**
(45) Veröffentlichungstag und Bekanntmachung des Hinweises auf die Patenterteilung: **14.05.2003**
(21) Anmeldenummer: 00918844.2
(22) Anmeldetag: 01.04.2000
(51) Int. Cl.: A47B 96/20, B27M 3/18, B29C 53/06

(54) **VERFAHREN ZUM HERSTELLEN VON MÖBELKORPUSSEN UND MÖBELKORPUS**
METHOD FOR PRODUCING FURNITURE BODIES AND FURNITURE BODY
PROCEDE DE PRODUCTION DE CORPS DE MOBILIER ET CORPS DE MOBILIER AINSI PRODUITS

(30) Priorität: 30.04.1999 DE 19919851
(43) Veröffentlichungstag der Anmeldung: 30.01.2002
(73) Patentinhaber: Riesmeier, Wilhelm, 32312 Lübbecke (DE)
(72) Erfinder: Riesmeier, Wilhelm, 32312 Lübbecke (DE)
(74) Vertreter: Elbertzhagen, Otto, Dipl.-Ing.
(86) Internationale Anmeldenummer: EP0002940
(87) Internationale Veröffentlichungsnummer: WO00065959

(56) Entgegenhaltungen:
- EP-A- 0 943 266
- DE-A- 1 628 963
- US-A- 3 933 401
- US-A- 5 413 834

## Beschreibung

Die Erfindung bezieht sich auf ein Verfahren zum Herstellen von Möbelkorpussen mit entlang gemeinsamer Eckkanten miteinander über Gehrungsflächen verbundenen Korpusseiten aus Holz oder holzartigen Werkstoffen, die zumindest außenseitig mit einem Dekor versehen sind.

Wie aus der US-A-5,413,845 bekannt, werden bei Verfahren der vorgenannten Art als Ausgangswerkstücke Platten verwendet, die an der im nachhinein außenliegenden Seite bereits das jeweils gewünschte Dekor haben. Das Dekor ist Teil einer Deckschicht, die auf das Trägermaterial der Platten aufgebracht ist. Insbesondere kommen hierfür Spanplatten in Betracht, die an ihren Außenseiten mit solchen Deckschichten kaschiert sind, in welche das Dekor tragende Papiere an der Außenseite eingebunden sind.

Andererseits ist es bekannt, zu verbauende Möbelteile, wie Profilleisten, die ebenfalls aus Holz oder holzartigen Werkstoffen bestehen, mit einem Dekoraufdruck zu versehen. Bei der Herstellung von Möbelkorpussen hat man ein solches Verfahren bislang nicht vorgesehen, weil man bislang davon Abstand genommen hatte, die für das Folienfaltverfahren bei Korpussen notwendigen Filmscharniere entlang der Korpuseckkanten an im nachhinein sichtbarer Stelle zu belassen. Außerdem ist ein Möbelkorpus ein voluminöser Körper, der sich rundum um seine Außenseiten nur mit einem erheblichen Aufwand bedrucken ließe.

Aus dem nachveröffentlichten Dokument EP-A-0 943 266 geht weiter ein Verfahren der eingangs genannten Art hervor. Hierbei wird an einer Platte, von der die Korpusseiten gebildet werden, an der beim fertigen Korpus außenliegenden Seite entlang der zu bildenden Eckkanten ein Filmscharnier aus einem biegsamen Material angebracht. Danach wird an der beim fertigen Korpus innenliegenden Seite entlang der zu bildenden Eckkanten eine im Querschnitt symmetrische, V-förmige Nut bis an das Filmscharnier heran eingefräst. Anschließend werden die hierdurch gebildeten, voneinander abgeteilten Korpusseiten unter Schließen der mit ihren Flanken die aneinanderliegenden Gehrungsflächen der Korpusseiten bildenden V-Nut um eine längs durch das Filmscharnier hindurchgehende Achse gegeneinander geschwenkt. Das das Filmscharnier bildende Material kann im Bedarfsfall an seiner Außenseite bedruckt werden, um das Aussehen dieses Materials dem der Außenseiten der Korpusseiten anzugleichen. Dies kommt vor allem bei furnierten oder mit Holzimitaten beschichteten Außenseiten der Korpusseiten in Betracht.

Der Erfindung liegt die Aufgabe zugrunde, ein Verfahren der vorgenannten Art zu schaffen, um in einfacher Weise sogleich aus einer nichtdekorierten Ausgangsplatte einen Möbelkorpus mit zumindest außenseitig angeordnetem Dekor herzustellen.

Diese Aufgabe wird nach der Erfindung durch die Merkmale des Patentanspruchs 1 gelöst.

Für die Erfindung ist wesentlich, daß die Ausgangsplatte, die üblicherweise eben ist und flachliegend bearbeitet wird, viel leichter ein- oder beidseitig mit einem Farbdruck versehen werden kann als ein fertiger Möbelkorpus. Das mit seiner Außenseite sowohl an der Außenseite der Platte als an den äußeren Eckkanten des Möbelkorpus freiliegende Filmscharnier wird hierbei mit dem gleichen Dekor überdruckt, so daß bei gleicher Grundfarbe wie der an den angrenzenden Außenseiten der Korpusseiten das Vorhandensein des Filmscharniers kaschiert werden kann. Zwar muß der im Querschnitt rechteckige oder quadratische Möbelkorpus entlang seiner vierten Eckkante noch in gesonderter Weise zusammengefügt und ggf. bedruckt werden, an allen vier Kor-. pusseiten und den drei weiteren Eckkanten ist jedoch der Dekoraufdruck vor dem Folienfaltvorgang bereits fertig. Zudem ermöglicht das erfindungsgemäße Verfahren eine besonders einfache Lagerhaltung für die Ausgangsplatten, die lediglich noch in einer Grundfarbe benötigt werden. Erst beim Fertigungsvorgang, nämlich beim Bearbeiten der jeweiligen Ausgangsplatte, wird das jeweils gewünschte Dekor durch Bedrucken aufgebracht. So können für die Ausgangsplatten auch wesentlich einfachere Deckschichten vorgesehen werden, die ohne ein eingebundenes Dekorpapier auskommen.

Die Erfindung schlägt sich gleichermaßen in einem nach dem vorgenannten Verfahren hergestellten Möbelkorpus nieder.

Vorteilhafte Ausgestaltungsmerkmale ergeben sich aus den Unteransprüchen.

Die Erfindung wird nachfolgend anhand der Zeichnung an einem Ausführungsbeispiel noch näher erläutert. Dabei zeigen:
- Fig. 1: eine schematische Stirnansicht eines Möbelkorpus,
- Fig. 2: eine Seitansicht zweier aneinander angrenzender Korpusseiten des Möbelkorpus nach Fig. 1 vor dem Faltvorgang,
- Fig. 3: eine der Fig. 2 entsprechende Seitansicht zweier Korpusseiten in anderer Ausführung des verbindenden Filmscharniers und
- Fig. 4: schematisch die Seitansicht einer Bearbeitungsstation der die Korpusseiten des Korpusses nach Fig. 1 bildenden Ausgangsplatte zum Aufbringen eines Farbaufdrucks.

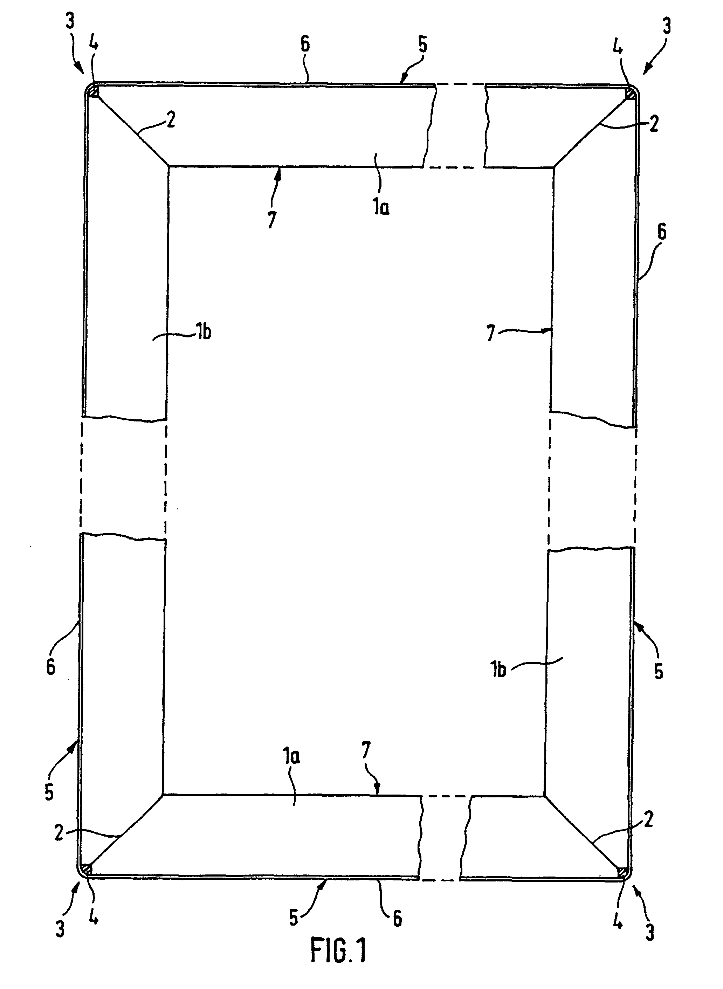

Der in Fig. 1 dargestellte Möbelkorpus besteht aus ersten einander gegenüberliegenden Korpusseiten 1a und aus zweiten einander gegenüberliegenden Korpusseiten 1b, die sich zu einem im Querschnitt quadratischen oder rechteckigen Korpus ergänzen. An den Ecken sind die Korpusseiten 1a und 1b über Gehrungen bzw. Gehrungsflächen 2 miteinander verbunden, der Gehrungswinkel beträgt hier gegenüber dem 90° Winkel der einander angrenzenden Korpusseiten 1a und 1b 45°. Der Korpus hat senkrecht zur Darstellungsebene verlaufende Eckkanten 3, wobei sich an drei dieser Eckkanten 3 ein Filmscharnier 4 befindet, welches aus einem elastischen Material besteht und gebogen ist, so daß es mit seiner gebogenen Außenseite eine Rundung entlang der jeweiligen Eckkante 3 aufweist. Im Bereich der vierten Eckkante 3 des Möbelkorpus ist ein den Filmscharnieren 4 ähnliches oder damit gleiches Material eingebracht, um entlang dieser vierten Eckkante 3 das gleiche ästhetische Aussehen wie an den drei übrigen Eckkanten 3 zu erzielen.

Die Korpusseiten 1a und 1b und damit der gesamte Möbelkorpus rundum haben Außenseiten 5, die einen Aufdruck 6 in Gestalt eines Oberflächendekors aufweisen. Dieser Aufdruck 6 erstreckt sich über die gewölbten Außenseiten der Filmscharniere 4 hinweg. Bei entsprechend angepaßter Grundfarbe der Außenseiten 5 der Korpusseiten 1a und 1b kann so beispielsweise dem Möbelkorpus das einer Holzfärbung und -struktur nachgebildete Aussehen gegeben werden. Auf diese Weise lassen sich Imitate beliebiger Hölzer erzielen, ebenso ist auch jedes andere Dekor möglich, wie es vor allem bei solchen Möbelkorpussen vorgesehen wird, die im Küchenmöbelbereich zum Einsatz kommen. In gleicher Weise wie die Außenseiten 5 können grundsätzlich auch die Innenseiten 7 der Korpusseiten 1a und 1b mit einem Farbaufdruck beschichtet sein.

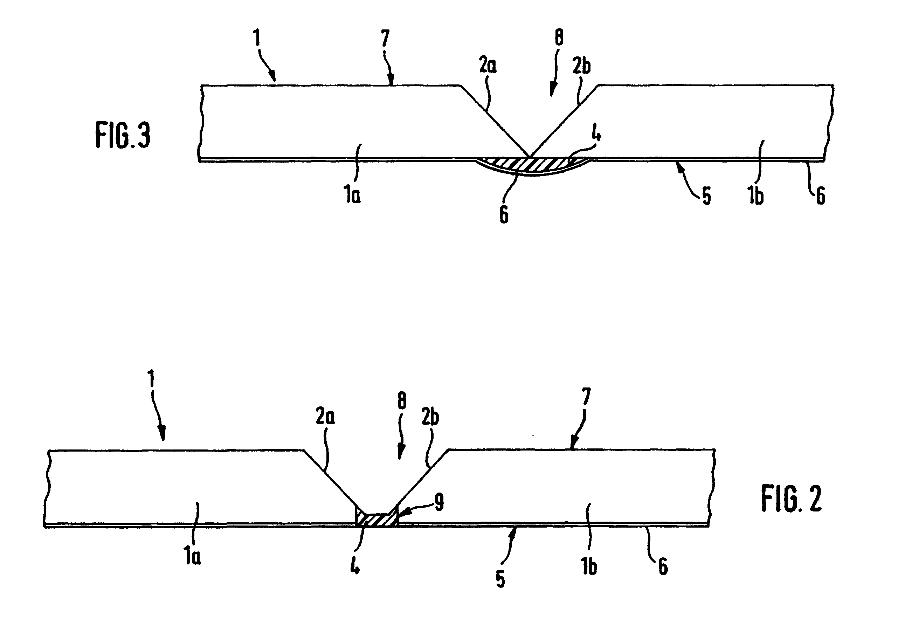

Der Möbelkorpus nach Fig. 1 wird im sogenannten Folienfaltverfahren zusammengefügt, bei dem die vier Korpusseiten vorzugsweise aus einer einzigen Ausgangsplatte 1 gebildet werden, von der ein Abschnitt in den Figuren 2 und 3 wiedergegeben ist. An denjenigen Stellen, an denen sich im nachhinein durch den Faltvorgang die Eckkanten 3 des fertigen Möbelkorpus ausbilden sollen, werden auf die Außenseite 5 der Platte 1 in Querrichtung diejenigen Streifen eines elastisch biegsamen Materials aufgebracht, welche die Filmscharniere 4 darstellen. Beim Ausführungsbeispiel nach Fig. 2 ist hierzu zunächst von der Außenseite 5 her eine Nut 9 an der jeweiligen Scharnierstelle in Querrichtung in die Platte 1 eingeschnitten worden, und in diese Nut 9 wird ein geeignetes Kunststoffmaterial eingespritzt oder eingegossen, welches zunächst die erforderlichen Biegeeigenschaften hat, auf Dauer jedoch völlig aushärten kann. Beim Ausführungsbeispiel nach Fig. 3 wird das das Filmscharnier 4 bildende Kunststoffmaterial auf die Außenseite 5 der Platte 1 aufgetragen. Es steht deshalb zunächst etwas erhaben vor, was jedoch infolge der beim nachfolgenden Faltvorgang auftretenden Dehnung eine untergeordnete Rolle spielt.

Nach dem Anbringen der Filmscharniere 4 werden in die Platte 1 von der Innenseite 7 her, die im nachhinein die Innenseiten der Korpusseiten 1a und 1b bildet, im Querschnitt v-förmige Nuten 8 eingefräst, die mit ihrem Scheitel bis an die Außenseite 6 der Platte 1, die im nachhinein die Außenseiten der Korpusseiten 1a und 1b bilden, bzw. bis an das jeweilige Filmscharnier 4 heranreichen. Bei der Rechteckoder Quadratform des fertigen Möbelkorpus beträgt der V-Winkel dieser Nuten 8 90°. Infolge der der eingeschnittenen V-Nuten 8 ist die Platte 1 nunmehr bereits in die Korpusseiten 1a und 1b unterteilt, wobei die jeweils zu der einen Korpusseite 1a gehörende Nutflanke 2a und die zu der anderen Korpusseite 1b gehörende Nutflanke 2b die Gehrungsflächen 2 bilden. Beim Faltvorgang werden unter Schließen der V-Nuten 8 die jeweils aneinander angrenzenden die Korpusseiten 1a und 1b bildenden Teile der Platte 1 unter 90° verschwenkt, wonach unter Bildung der Gehrungen 2 die Nutflanken 2a und 2b deckungsgleich aufeinanderliegen.

Nachdem die Filmscharniere 4 angebracht und bevor die V-Nuten 8 in die Platte 1 eingefräst werden, wird auf die Außenseite 5 der Platte 1 ein Dekor-Aufdruck 6 aufgebracht, der sich bis über die Außenseiten der Filmscharniere 4 hinweg erstreckt, so daß also die Außenseiten der Filmscharniere 4 in gleicher Weise wie die Außenseite 5 der Platte 1 bedruckt sind.

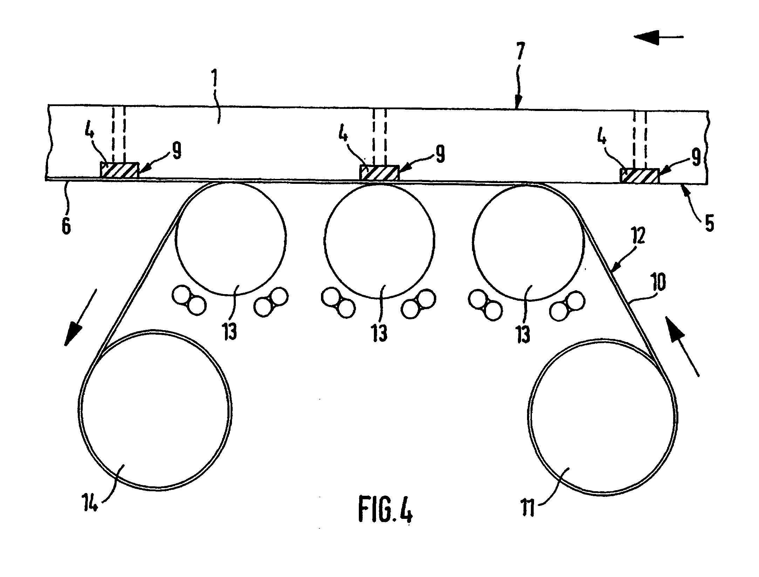

Wie dies im einzelnen vorgenommen wird, zeigt Fig. 4. Die Platte 1 wird vorzugsweise im Durchlauf an einer Station vorbeigeführt, an der sie vorübergehend mittels einer Prägefolie 10 unterlegt wird. Die Prägefolie 10 wird von einem Vorratswickel 11 abgezogen und trägt an der die Platte 1 kontaktierenden Seite einen Farbauftrag 12, der, wie in Fig. 4 dargestellt, auf die Außenseite 5 der Platte 1 bis über die Außenseiten der Filmscharniere 4 hinweg übertragen wird. In gleicher Weise kann grundsätzlich auch die Innenseite 7 der Platte 1 beschichtet werden. Der Farbauftrag 12 bildet auf der Außenseite 5 folglich den ununterbrochen durchgehenden, sich über die Außenseiten der Filmscharniere 4 hinweg erstreckenden Dekor-Aufdruck 6. Mittels Andruckwalzen 13 wird die synchron mit der Platte 1 mitlaufende Prägefolie an die Außenseite 5 angedrückt, und die verbrauchte Prägefolie 10, die ihren Farbauftrag 12 abgegeben hat, wird auf einer Spule 14 aufgewickelt. Somit wird die Platte 1 erst nach dem Anbringen der Filmscharniere 4 durch Übertragen des dekorierenden Farbauftrags 12 oberflächenfertig gemacht, bevor die V-Nuten 8 eingefräst werden und anschließend der Faltvorgang zur Bildung des fertigen Möbelkorpus durchgeführt wird.

## Patentansprüche

1. Verfahren zum Herstellen von Möbelkorpussen mit entlang gemeinsamer Eckkanten (3) miteinander über Gehrungsflächen (2) verbundenen Korpusseiten (1a, 1b) aus Holz oder holzartigen Werkstoffen, bei dem an einer Platte (1) an der beim fertigen Korpus außenliegenden Seite, der sogenannten Außenseite (5), entlang der zu bildenden Eckkanten (3) jeweils ein Filmscharnier (4) aus einem biegsamen Material angebracht und dann an der beim fertigen Korpus innenliegenden Seite, der sogenannten Innenseite (7), entlang der zu bildenden Eckkanten (3) eine im Querschnitt symmetrische, V-förmige Nut (8) bis an das Filmscharnier (4) heran eingefräst wird, wonach die hierdurch gebildeten, voneinander abgeteilten Korpusseiten (1a, 1b) unter Schließen der mit ihren Flanken (2a, 2b) die aneinanderliegenden Gehrungsflächen (2) bildenden V-Nut (8) um eine längs durch das jeweilige Filmscharnier (4) hindurchgehende Achse gegeneinander geschwenkt werden, wobei nach dem Anbringen der Filmscharniere (4) die Außenseite (5) der Platte (1) über die Außenseiten der Filmscharniere (4) hinweg mit einem Dekor bedruckt wird.

2. Verfahren nach Anspruch 1,
**dadurch gekennzeichnet,**
**daß** zusätzlich die Innenseite (2) der Platte (1) mit einem Dekor bedruckt wird.

3. Verfahren nach Anspruch 1 oder 2,
**dadurch gekennzeichnet,**
**daß** eine Platte (1) verwendet wird, die an der zu bedruckenden Seite (5, 7) eine einfarbige Deckschicht aufweist.

4. Verfahren nach einem der Ansprüche 1 - 3,
**dadurch gekennzeichnet,**
**daß** die Platte (1) an der zu bedruckenden Seite (5, 7) mit einer Prägefolie (10) unterlegt wird, die einen auf die betreffende Seite (5, 7) der Platte (1) übertragbaren Farbauftrag (12) entsprechend dem Dekoraufdruck hat.

5. Verfahren nach einem der Ansprüche 1 - 4,
**dadurch gekennzeichnet,**
**daß** die Bedruckung der betreffenden Seite (5, 7) der Platte (1) vor dem Einfräsen der V-Nut (8) vorgenommen wird.

6. Verfahren nach einem der Ansprüche 1-5,
**dadurch gekennzeichnet,**
**daß** das Filmscharnier (4) mit seiner Außenseite flächenbündig mit der Außenseite (5) der Platte (1) in einer von der Außenseite (5) her in die Platte (1) eingeschnittenen Nut (9) angebracht wird.

7. Verfahren nach einem der Ansprüche 1 - 5,
**dadurch gekennzeichnet,**
**daß** das Filmscharnier (4) über die Außenseite (5) der Platte (1) vorstehend angebracht wird.

8. Verfahren nach Anspruch 6 oder 7,
**dadurch gekennzeichnet,**
**daß** das Filmscharnier (7) in Form eines spritz- oder fließfähigen, im nachhinein aushärtenden Materials in die eingeschnittene Nut (9) der Platte (1) eingebracht oder auf deren Außenseite (5) aufgebracht wird.

## Claims

1. Method of producing furniture carcasses with carcass sides (1a, 1b) made from wood or wood-like materials connected with each other along common edges by means of mitre surfaces (2) wherein on a panel (1) on the outer-lying face in the finished carcass, the so-called outer face (5), along the corner edges (3) a film hinge (4) made from a flexible material is respectively arranged and then on the inner-lying face in the finished carcass, the so-called inner face (7), along the corner edges (3) a V-shaped groove (8) which is symmetrical in cross-section is moulded as far as the film hinge, after which the hereby formed carcass sides (1a, 1b) divided up from each other with the closure of the V-groove (8) forming with its flanks (2a, 2b) the mitre surfaces (2) lying against each other are pivoted against each other about an axis extending longitudinally through the respective film hinge (4) wherein after the arrangement of the film hinges (4) the outer face (5) of the panel (1) is printed beyond the outer faces of the film hinges (4) with a pattern.

2. Method according to claim 1
**characterised in that**
additionally the inner face (2) of the panel is printed with a pattern.

3. Method according to claim 1 or 2
**characterised in that**
a panel (1) is used which has a single-coloured covering layer on the side (5, 7) to be printed.

4. Method according to one of the claims 1 to 3
**characterised in that**
the panel (1) is lined on the side to be printed (5, 7) with an embossed film (10) which has a colour imprint (12) corresponding to the pattern imprint which can be transferred to the associated side (5, 7) of the panel (1).

5. Method according to one of the claims 1 to 4
**characterised in that**
the printing of the associated side (5, 7) of the panel (1) is carried out before the moulding of the V-groove (8).

6. Method according to one of the claims 1 to 5
**characterised in that**
the film hinge (4) is arranged with its outer face with its surface flush with the outer face (5) of the panel (1) in a groove (9) cut from the outer face (5) into the panel (1).

7. Method according to one of the claims 1 to 5
**characterised in that**
the film hinge (4) is arranged projecting over the outer face (5) of the panel (1).

8. Method according to claim 6 or 7
**characterised in that**
the film hinge (7) is inserted in the form of a material which can be injected or can flow and retrospectively hardens in the cut-out groove (9) of the panel (1) or is arranged on the outer face (5) of the same.

## Revendications

1. Procédé de fabrication de corps de meubles avec des parties latérales de corps (1a, 1b) en bois ou en matériaux genre bois, qui sont reliées ensemble, le long de bords angulaires communs (3), par des surfaces en onglet (2), procédé dans le cadre duquel une plaque (1) est pourvue d'une charnière pelliculaire (4) en matière flexible, mise en place sur le côté, devant être situé à l'extérieur du corps fini, donc sur la face extérieure (5), le long de chacun des bords angulaires (3) devant former les coins, puis équipée, sur le côté devant être situé à l'intérieur du corps fini, donc sur la face interne (7), le long des bords angulaires (3) devant former les coins, d'une entaille en forme de V (8) qui présente une section transversale symétrique et est fraisée jusqu'à la charnière pelliculaire (4), ce après quoi les parties latérales (1a, 1b) de corps de meubles ainsi formées, séparées l'une de l'autre, sont pivotées, l'une vers l'autre, sur l'axe longitudinal qui traverse la charnière pelliculaire (4), tout en fermant l'entaille en V (8), dont les flancs (2a, 2b) forment les surfaces en onglet (2) qui viennent porter l'une contre l'autre, et, après la mise en place de la charnière pelliculaire (4), un décor étant imprimé sur la face extérieure (5) de la plaque (1), en passant pardessus les côté extérieurs de la charnière pelliculaire (4).

2. Procédé selon la revendication 1,
**caractérisé en ce que**,
de plus, le côté intérieur (2) de la plaque (1) est pourvu d'un décor imprimé.

3. Procédé selon la revendication 2,
**caractérisé en ce que**
l'on utilise une plaque (1) dont la face à imprimer (5, 7) présente une couche de recouvrement unie.

4. Procédé selon l'une des revendication 1 à 3,
**caractérisé en ce que**
la plaque (1) est doublée, sur le côté à imprimer (5, 7), d'une feuille gaufrée (10) qui présente une couche de peinture (12) qui correspond au décor à imprimer et est transmissible à la face concernée (5, 7) de la plaque (1).

5. Procédé selon l'une des revendications 1 à 4,
**caractérisé en ce que**
l'impression de la face concernée (5, 7) de la plaque (1) est effectuée avant le fraisage de l'entaille en V (8).

6. Processus selon l'une des revendications 1 à 5,
**caractérisé en ce que**
la charnière pelliculaire (4) est mise en place dans une entaille (9) qui est pratiquée dans la plaque (1), à partir de la face extérieure (5), la face extérieure de ladite charnière pelliculaire (4) étant à surface plane avec la face extérieure (5) de la plaque (1).

7. Procédé selon l'une des revendications 1 à 5,
**caractérisé en ce que**
la charnière pelliculaire (4) est mise en place en saillie de la face extérieure (5) de la plaque (1).

8. Procédé selon la revendication 6 ou 7,
**caractérisé en ce que**
la charnière pelliculaire (7) est mise en place, en forme de matière apte à l'injection ou à l'écoulement libre et durcissant ultérieur, dans l'encoche (9), découpée dans la plaque (1), ou sur la face extérieure (5) de cette dernière.
